# EUROPÄISCHE PATENTSCHRIFT

(11) **EP 3 123 868 B1**
(45) Veröffentlichungstag und Bekanntmachung des Hinweises auf die Patenterteilung: **12.09.2018**
(21) Anmeldenummer: 15178392.5
(22) Anmeldetag: 25.07.2015
(51) Int. Cl.: A23C 9/12, A23C 9/142

(54) **VERFAHREN ZUR HERSTELLUNG VON MILCHPRODUKTEN MIT DEFINIERTEM LACTOSEGEHALT**
PROCESS FOR MAKING DAIRY PRODUCTS WITH DEFINED LACTOSE CONTENT
PROCÉDÉ POUR LA PREPARATION DE PRODUITS DU LAIT AVEC TENEUR EN LACTOSE DÉFINIE

(43) Veröffentlichungstag der Anmeldung: 01.02.2017
(73) Patentinhaber: DMK Deutsches Milchkontor GmbH, 27404 Zeven (DE)
(72) Erfinder: Aschemann, Jan, 27404 Zeven (DE); Oehlckers, Thorben, 21244 Buchholz (DE); Döring, Sven-Rainer, 27404 Zeven (DE)
(74) Vertreter: Fabry, Bernd

(56) Entgegenhaltungen:
- EP-A1- 2 796 051
- DE-A1- 2 354 475
- US-A1- 2005 196 508
- US-A1- 2010 055 289
- US-A1- 2011 059 220

## Beschreibung

### GEBIET DER ERFINDUNG

Die Erfindung befindet sich auf dem Gebiet der lactosefreien Milcherzeugnisse und betrifft die Erzeugung von lactosefreien Milchprodukten deren Geschmacksprofil dem der Ausgangsmilch entspricht.

### STAND DER TECHNIK

Neugeborene Säugetiere bilden während ihrer Stillzeit das Enzym Lactase, welches das Disaccharid Milchzucker in die vom Stoffwechsel verwertbaren Zuckerarten D-Galactose und D-Glucose spaltet. Im Laufe der natürlichen Entwöhnung von der Muttermilch sinkt die Aktivität der Lactase auf etwa 5-10 % der Aktivität bei der Geburt. Das gilt für den Menschen und alle anderen Säugetiere. Nur bei Populationen, die seit langer Zeit Milchwirtschaft betreiben, hat sich eine Mutation durchgesetzt, die dazu führt, dass auch noch im Erwachsenenalter genügend Lactase produziert wird (Lactasepersistenz). Vermutlich liegt das daran, dass die höhere Lactaseaktivität einen Selektionsvorteil (Mineralstoffe, Nährwert) für diese Gruppen bot.

Bei mangelhafter Lactaseaktivität gelangt ungespaltener Milchzucker beim Menschen bis in den Dickdarm, wo er von Darmbakterien aufgenommen und vergoren wird. Als Gärungsprodukte entstehen Milchsäure sowie Methan und Wasserstoff. Die Gase führen unter anderem zu Blähungen, die osmotisch aktive Milchsäure zu einem Wassereinstrom in den Darm (osmotischer Diarrhoe).

In Asien und Afrika betrifft die fehlende Lactasepersistenz bzw. Lactoseintoleranz den größten Teil der erwachsenen Bevölkerung (90 % oder mehr), in Westeuropa, Australien und Nordamerika sind es 5-15 % (bei hellhäutigen Menschen). In Deutschland leiden nach Schätzungen 15-25 % der Gesamtbevölkerung an einer Milchzuckerunverträglichkeit. Der Grund für eine Lactoseintoleranz ist ein angeborener Enzymmangel, bei dem die entsprechenden Enzyme fehlen, die den Milchzucker in seine Einzelteile aufspalten und abbauen. In den letzten Jahren ist zumindest das Bewusstsein für einen Zusammenhang der genannten Symptome mit der Anwesenheit von Lactose insbesondere in Milchprodukten stark gewachsen. Dies hat dazu geführt, dass es ein großes Bedürfnis nach lactosearmen oder besser noch lactosefreien Produkten gibt.

Aus dem Stand der Technik sind unterschiedlichste Verfahren bekannt, mit deren Hilfe man Lactose aus Milchprodukten entweder abtrennt und als Nebenprodukt weiterverarbeitet oder durch Zugabe entsprechende Enzyme abbaut.

Gegenstand der EP 1503630 B1 (VALIO) ist beispielsweise ein Verfahren zur Herstellung von lactosefreien Produkten, bei dem die Ausgangsmilch zunächst einer Ultrafiltration unterworfen wird. Das dabei anfallende erste Permeat wird nanofiltriert, wobei die Lactose über das zweite Retentat ausgeschleust wird und die einwertigen Salze (Natrium, Kalium) in das zweite Permeat gelangen. Dieses wird mit Hilfe einer Umkehrosmose aufkonzentriert und das so erhaltene dritte Retentat dem ersten Retentat wieder beigemischt, bevor dieses dann einer Hydrolyse unterworfen wird, um die Lactose enzymatisch abzubauen. Das Verfahren hat indes zwei erhebliche Nachteile: der Lactosegehalt des Retentats, welches hydrolysiert wird, lässt sich nicht steuern, sondern stellt sich aufgrund der Bedingungen in der Ultrafiltration automatisch auf einen sehr niedrigen Wert ein. In der Hydrolyse stehen dann auch nur geringe Mengen an Zucker für die Spaltung zur Verfügung, so dass eine zwar lactosefreie Milch erhalten wird, die jedoch weit weniger süß und geschmacklich ansprechend ist, wie die Ausgangsmilch. Des Weiteren gelangen über den Prozess nur Alkalisalze in die Milch zurück. Um das Geschmacksprofil der Ursprungsmilch wieder einigermaßen zu erreichen, müssen zweiwertige Salze aus anderen Quellen wieder zugesetzt werden. In Summe wird jedenfalls ein Produkt erhalten, welches dem gewünschten Geschmacksprofil der Ausgangsmilch nur angenähert entspricht.

Ein ähnlicher Weg wird in der EP 2207428 B1 (ARLA) vorgeschlagen: hier wird die Milch ebenfalls zunächst einer Ultrafiltration unterworfen, wobei das Permeat dann nanofiltriert wird. Das Permeat aus der Nanofiltration wird mit dem Retentat aus der Ultrafiltration vermischt und anschließend hydrolysiert. Dieses Verfahren weist jedoch bezüglich des Geschmacksprofils der resultierenden Produkte die gleichen Nachteile wie das Valio-Verfahren auf.

Das Dokument DE 2 354 475 A1 betrifft eine Diätmilch mit verändertem Lactosegehalt oder fast vollständig entfernter Lactose sowie eines Verfahrens zur Herstellung der Diätmilch nach physikalischen Methoden ohne Zuhilfenahme chemischer Behandlungsmethoden und unter Vermeidung der Bildung von Glucose oder Galaktose. Es wird ein Verfahren beschrieben, bei dem man die Magermilch im ersten Schritt einer Ultrafiltration unterwirft, wobei ein proteinreiches Retentat ("erste Fraktion (AI)") und ein laktosehaltiges Permeat ("zweite Fraktion (AII)") erhalten werden. Das Permeat (AII) wird einer Umkehrosmose unterzogen, wobei die Laktose sich im Retentat ("erste Fraktion (BI)") und die Mineralien im Permeat ("zweite Fraktion (BII)") wiederfinden. Dieses wird verwendet, um die proteinreiche Fraktion (AI) zu verdünnen, woraus eine Magermilch mit vermindertem Laktosegehalt resultiert.

Das Dokument US 2011/0059220 A1 offenbart die Herstellung von lactosefreier Milch durch eine Abfolge von Ultrafiltration, Nanofiltration und optional eine Umkehrosmose. Dabei wird die Ausgangsmilch einer Ultrafiltration unterworfen, wobei ein proteinreiches UF-Retentat und lactosereiches UF-Permeat entstehen. Das UF-Permeat wird einer Nanofiltration unterworfen, wobei ein lactosereiches NF-Retentat und NF-Permeat (welches eine kleine Menge an Lactose sowie Mineralien enthält) entstehen. Das NF-Permeat kann optional einer Umkehrosmose unterworfen werden, wobei ein RO-Permeat (welches logischerweise die sogenannten *"small molecules"* aber auch einen Teil von Salzen enthält) und ein RO-Retentat (welches logischerweise Mineralien sowie wie die restliche Lactose enthält). Das proteinreiche UF-Retentat wird mit dem NF-Permeat bzw. mit dem RO-Retentat und dem RO-Permeat kombiniert, und das erhaltene Mischung durch Zugabe von Lactase hydrolisiert, um das lactosefreie Produkt zu erhalten.

Die Aufgabe der vorliegenden Erfindung hat daher darin bestanden, ausgehend von Vollmilch, Magermilch oder standardisierter Milch, welche typisch zwischen 4 und 5 Gew.-% Lactose aufweist, eine an Lactose abgereicherte Milchzusammensetzung zur Verfügung zu stellen, die jedoch über die gleiche oder die im Wesentlichen gleiche Mineralienzusammensetzung wie die Ausgangsmilch verfügt, um auf diese Weise lactosefreie Produkte herstellen zu können, deren Geschmacksprofil dem der Ausgangsmilch entspricht.

### BESCHREIBUNG DER ERFINDUNG

Gegenstand der vorliegenden Erfindung ist ein Verfahren zur Herstellung von lactosefreien Milchprodukten, umfassend die folgenden Schritte:
(a) Ultrafiltration einer Ausgangsmilch zur Erzeugung eines ersten Permeats P1 und eines ersten Retentats R1;
(b) Umkehrosmose des ersten Permeats P1 zur Erzeugung eines zweite Permeats P2 und eines zweiten Retentats R2;
(c) Decalcifizierung des zweiten Retentats R2; wobei ein Präzipitat entsteht, welches schwerlösliche Ca/Mg-Salze enthält;
(d) Ultrafiltration des Präzipitates aus Schritt (c) zur Erzeugung eines dritten Permeats P3, welches ein Lactosekonzentrat ist, und eines dritten Retentats R3, welches ein Mineralienkonzentrat ist;
(e) Vermischen des ersten Retentats R1 mit jeweils einer solchen Menge des dritten Permeats P3 sowie des dritten Retentats R3, so dass ein standardisiertes Milchprodukt mit einer definierten Konzentration an Lactose und Salzen erhalten wird; und
(f) Hydrolyse des standardisierten Milchproduktes aus Schritt (e) unter Zugabe einer solchen Menge an Lactase, dass die im Produkt enthaltene Menge an Lactose vollständig in Glucose und Galactose gespalten wird.

Überraschenderweise wurde gefunden, dass das erfindungsgemäße Verfahren das geschilderte Anforderungsprofil vollständig erfüllt. Dabei wird die Milch zunächst in eine proteinreiche/lactosearme und eine proteinarme/lactosereiche Fraktion aufgetrennt, letztere zunächst aufkonzentriert und in ein Salz- und ein Lactosekonzentrat separiert, und die beiden Konzentrate der ersten proteinreichen/lactosearmen Fraktion in solchen Mengen wieder zugesetzt ("Standardisierung"), dass sich die Zusammensetzung der Ausgangsmilch wieder ergibt, die Menge an Lactose jedoch deutlich vermindert ist. Vorzugsweise stellt man bei der Rückvermischung den Lactosegehalt auf etwa ein Viertel des Ausgangswertes ein. Bei der nachfolgenden Hydrolyse zerfällt die Lactose in ein Molekül Glucose und ein Molekül Galactose. Untersuchungen zur relativen Süßkraft (rS) verschiedener Kohlenhydrate bezogen auf Saccharose (nach Noeske, 1996) ergaben, dass sowohl Glucose (rS=64) als auch Galactose (rS=60) jeweils in etwa die doppelte Süßkraft im Vergleich zu Lactose (rS=30) aufweisen. Reduziert man also die Lactosemenge vor der Hydrolyse auf ein Viertel des Ausgangswertes, entsteht gerade wieder die erforderliche Zuckermenge, mit der die gleiche Süßkraft der Ausgangsmilch erreicht wird. Dadurch schmeckt die Milch nicht süßer als zuvor. Dadurch, dass man der Milch bei der Standardisierung keine Fremdsalze, sondern Eigensalze zusetzt, wird nach der Hydrolyse in Summe ein Produkt erhalten, das zwar lactosefrei ist, sich aber ansonsten in der Zusammensetzung von der Ausgangsmilch nicht unterscheidet und daher den gleichen Geschmackseindruck aufweist.

Selbstverständlich ist es mit Hilfe des Verfahrens ebenfalls möglich, einen sehr niedrigen Lactosegehalt einzustellen - beispielsweise, indem man dem ersten Retentat R1 gar kein oder nur sehr wenig Lactosekonzentrat (Permeat P3) zusetzt. Dementsprechend wird dann nach der Hydrolyse eine ungesüßte, sehr kalorienarme Milch erhalten.

### 1. ULTRAFILTRATION

Im ersten Verfahrensschritt wird die Ausgangsmilch, bei der es sich um Vollmilch, Magermilch oder standardisierte Milch mit einem Lactosegehalt im Bereich von etwa 3 bis etwa 5 Gew.-% und vorzugsweise etwa 4 bis etwa 4,5 Gew.-% handeln kann, in eine proteinreiche und lactosearme sowie eine proteinarme und lactosereiche Fraktion aufgetrennt.

Die Ultrafiltration gehört zu den Filtrationsverfahren aus dem Bereich der Membrantechnik, mit der sich makromolekulare Substanzen und kleine Partikel aus einem Medium abtrennen und aufkonzentrieren lassen. Man unterscheidet Mikrofiltration, Ultrafiltration und Nanofiltration über den Grad der Abtrennung. Liegt die Ausschlussgrenze (oder auch "*Cut-off*") bei 100 nm oder darüber, spricht man von Mikrofiltration. Liegt die Ausschlussgrenze in dem Bereich zwischen 2 bis 100 nm, bezeichnet man dies als Ultrafiltration. Bei der Nanofiltration liegt die Ausschlussgrenze unterhalb von 2 nm. In jedem dieser Fälle handelt es sich um rein physikalische, d.h. mechanische Membrantrennverfahren, die nach Prinzip des mechanischen Größenausschlusses arbeiten: alle Partikel in den Fluiden, die größer als die Membranporen sind, werden von der Membran zurückgehalten. Treibende Kraft in beiden Trennverfahren ist der Differenzdruck zwischen Zulauf und Ablauf der Filterfläche, der zwischen 0,1 und 10 bar liegt.

Die Ausschlussgrenzen von Ultrafiltrationsmembranen werden auch in Form des *NMWC* (englisch: Nominal Molecular Weight Cut-Off, auch *MWCO,* Molecular Weight Cut Off, Einheit: Dalton) angegeben. Er ist definiert als die minimale Molekülmasse globulärer Moleküle, welche durch die Membran zu 90% zurückgehalten werden. In der Praxis sollte der NMWC mindestens 20 % niedriger sein als die Molmasse des abzutrennenden Moleküls. Weitere qualitative Aussagen über die Filtration lassen sich anhand des *Flux* (Wasserwert) (Transmembranfluss oder Durchtrittsrate) machen. Dieser verhält sich im Idealfall proportional zum Transmembrandruck und reziprok zum Membranwiderstand. Diese Größen werden sowohl von den Eigenschaften der verwendeten Membran als auch durch Konzentrationspolarisation und eventuell auftretendes Fouling bestimmt. Die Durchtrittsrate wird auf 1 m² Membranfläche bezogen. Ihre Einheit ist l/(m²h bar).

In einer bevorzugten Ausführungsform des erfindungsgemäßen Verfahrens wird die Ultrafiltration unter Zugabe einer solchen Menge Diawassers durchgeführt, dass ein erstes Retentat mit einem Verdünnungsfaktor von etwa 5 bis etwa 20 erhalten und vorzugsweise etwa 8 bis etwa 12 erhalten wird. Vorzugsweise bezieht man dabei das Diawasser aus dem zweiten Permeat P2 der nachfolgenden Umkehrosmose.

Für die Ultrafiltration haben sich Membranen als besonders geeignet erwiesen, die einen Porendurchmesser im Bereich von etwa 1.000 bis etwa 50.000 und vorzugsweise etwa 5.000 bis etwa 25.000 Dalton besitzen. Dem hingegen bevorzugt beispielsweise die Nanofiltration Porendurchmesser im Bereich von 100 bis 1.000 und vorzugsweise etwa 150 bis 800 Dalton.

Der Werkstoff der Filterfläche kann Edelstahl, Polymerwerkstoffe, Keramik, Aluminiumoxid oder textile Gewebe darstellen. Es gibt verschiedene Erscheinungsformen der Filterelemente: Kerzenfilter, Flachmembranen, Spiralwickelmembranen, Taschenfilter und Hohlfasermodule, die im Sinne der vorliegenden Erfindung alle grundsätzlich geeignet sind. Vorzugsweise werden jedoch Spiralwickelmembranen aus Polymerwerkstoffen oder Kerzenfilter aus Keramik oder Aluminiumoxid eingesetzt, wobei sich die erste Ausführungsform für die Ultrafiltration und die zweite für die Nanofiltration besonders bevorzugt erwiesen hat.

Die Ultrafiltration kann im Sinne der vorliegenden Erfindung "heiß" oder "kalt", d.h. im Temperaturbereich von 4 bis 55 °C durchgeführt werden. Bevorzugt ist es jedoch, bei Temperaturen im niedrigen Bereich von etwa 4 bis etwa 25 °C und insbesondere etwa 8 bis etwa 18 °C zu arbeiten.

### UMKEHROSMOSE

Das erste Permeat P1 der Ultrafiltration ist praktisch frei von Proteinen, enthält jedoch Lactose und Mineralien in gegenüber der Ausgangsmilch praktisch unveränderten Konzentrationen. In der folgenden Umkehrosmose wird die Menge an diesen beiden Komponenten aufkonzentriert.

Die Umkehrosmose oder Reversosmose ist ein physikalisches Verfahren zur Aufkonzentrierung von in Flüssigkeiten gelösten Stoffen, bei der mit Druck der natürliche Osmose-Prozess umgekehrt wird. Das Medium, in dem die Konzentration eines bestimmten Stoffes verringert werden soll, ist durch eine halbdurchlässige (semipermeable) Membran von dem Medium getrennt, in dem die Konzentration erhöht werden soll. Dieses wird einem Druck ausgesetzt, der höher sein muss als der Druck, der durch das osmotische Verlangen zum Konzentrationsausgleich entsteht. Dadurch können die Moleküle des Lösungsmittels gegen ihre "natürliche" osmotische Ausbreitungsrichtung wandern. Das Verfahren drückt sie in das Kompartiment, in dem gelöste Stoffe weniger konzentriert vorliegen.

Die osmotische Membran, die nur die Trägerflüssigkeit (Solvent) durchlässt und die gelösten Stoffe (Solute) zurückhält, muss diesen hohen Drücken standhalten können. Wenn der Druckunterschied das osmotische Gefälle mehr als ausgleicht, passen die Solventmoleküle wie bei einem Filter durch die Membran, während die übrigen Moleküle zurückgehalten werden. Im Gegensatz zu einem klassischen Membranfilter verfügen Osmosemembranen nicht über durchgehende Poren. Vielmehr wandern die Ionen und Moleküle durch die Membran hindurch, indem sie durch das Membranmaterial diffundieren.

Der osmotische Druck steigt mit zunehmendem Konzentrationsunterschied. Wird der osmotische Druck gleich dem angelegten Druck, kommt der Prozess zum Stehen. Es liegt dann ein osmotisches Gleichgewicht vor. Ein stetiger Abfluss des Konzentrats kann das verhindern. Beim Konzentratauslass wird der Druck entweder über einen Druckregler kontrolliert oder über einen Druckaustauscher genutzt, um den im Zulauf des Systems benötigten Druck aufzubauen. Druckaustauscher senken durch Energierückgewinnung sehr effektiv die Betriebskosten einer Umkehrosmoseanlage. Der Energieaufwand pro Kubikmeter Wasser liegt bei 4 bis 9 kWh. Vorzugsweise beträgt der Konzentrierungsfaktor im erfindungsgemäßen Verfahren etwa 2,5 bis etwa 5 und insbesondere etwa 3 bis etwa 4.

Das Auskristallisieren (Ausfallen) der Solute in den Membranen muss verhindert werden. Dies kann durch Zugabe von Antibelagmitteln (engl. *Antiscaling*) oder Säuren erreicht werden. Antibelagmittel sind hier polymere Verbindungen auf Phosphat- oder Maleinsäurebasis, welche die sich bildenden Kristallite umschließen und so verhindern, dass kristalline Ausfällungen auf der Membran entstehen können. Eine Reinigung der Membran kann dennoch erforderlich bleiben. Um Beschädigungen der Membran zu verhindern, können zudem Filter vorgeschaltet werden. Ein Feinfilter kann mechanische, ein Aktivkohlefilter chemische Beschädigungen (z. B. durch Chlor) verhindern.

Bei der Umkehrosmose wird ein zweites Permeat erhalten, das im Wesentlichen nur Diawasser darstellt, das zurück in die Ultrafiltration geführt wird, sowie ein Retentat, in dem Lactose und Mineralien konzentriert sind und das eine Trockenmasse in der Größenordnung von etwa 15 bis etwa 20 Gew.-% besitzt.

### DECALCIFIZIERUNG

Um die zweiwertige Ionen aus dem Konzentrat der Umkehrosmose zu gewinnen, wird das zweite Retentat R2 durch Zugabe von Basen zunächst auf einen annähernd neutralen pH-Wert im Bereich von 6 bis 8 eingestellt und die Mineralien, die im Wesentlichen lösliche Phosphate darstellen mit einer solchen Menge einer Lösung eines wasserlöslichen Calcium- oder Magnesiumsalzes versetzt, dass schwerlösliche Ca/Mg-Salze gefällt werden. Zur Einstellung des pH-Wertes und zur Fällung werden NaOH, eine wässrige Zubereitung aus Calcium/Magnesiumchlorid und Alkalihydroxid oder Calciumhydroxid eingesetzt. Grundsätzlich können zur Einstellung des pH-Wertes auch andere Alkali- oder Erdalkalibasen, wie z.B. KOH eingesetzt werden. Auch die Natur des Fällungssalzes ist an sich unkritisch, es lassen sich beispielsweise auch Bariumsalze fällen. Die Verwendung von Calcium- und Magnesiumsalzen hat indes den Vorteil, dass das Fällungsmittel kostengünstig und die Salze ein sehr niedriges Löslichkeitsprodukt haben, die Fällung also im Wesentlichen vollständig ist. Auch ohne Zugabe von Fällungsmitteln erfolgt die Demineralisierung in Rührkesseln, wobei es sich als vorteilhaft erwiesen hat, eine Temperatur im Bereich von etwa 50 bis 90 und vorzugsweise von etwa 80 °C einzustellen. Die Fällungszeit liegt typischerweise bei etwa 10 bis 60 und vorzugsweise etwa 15 bis 20 min, wobei diese Angaben nur als Anhaltspunkte zu verstehen sind, da niedrigere Temperaturen längere Reaktionszeiten erfordern und umgekehrt.

### 2. ULTRAFILTRATION

Das Präzipitat aus dem Decalcifizierungsschritt wird einer zweiten Ultrafiltration zugeleitet, für die grundsätzlich die gleichen Verfahrensbedingungen gelten, wie sie vorstehend bereits erläutert worden sind. Es ist bevorzugt, die Ultrafiltration in der Kälte durchzuführen, es ist aber auch möglich, das heiße Präzipitat ohne weitere oder nur nach geringfügiger Kühlung auf die Membran zu geben. Hierbei wird ein drittes Retentat R3 erhalten, in welchem sich im Wesentlichen, d.h. zu etwa 90 Gew.-% die Calcium/Magnesiumsalze finden und das eine Trockenmasse von etwa 8 bis etwa 15 Gew.-% aufweist. Analog wird ein drittes Permeat P3 erhalten, das eine Trockenmasse von etwa 15 bis etwa 25 Gew.-% und vorzugsweise etwa 15 bis etwa 20 Gew.-% aufweist und im Wesentlichen Lactose und daneben die Alkalisalze enthält.

### MISCHUNG

Der Mischungsschritt dient der Herstellung eines standardisierten Milchproduktes, das nachfolgend durch Hydrolyse vollständig von Lactose befreit wird. Dazu wird dem im ersten Schritt erhaltenen proteinreichen ersten Retentat definierte Mengen an Lactose und Mineralien zugesetzt. Ziel ist es insbesondere, ein Produkt zu erhalten, das gegenüber der Ausgangsmilch nur noch etwa 25 % Lactose aufweist, so dass nach der Hydrolyse wieder der gleiche Süßungsgrad erreicht wird. Auch die Zugabe der Mineralien wird mit dem Ziel verfolgt, wieder die ursprüngliche Salzkonzentration und Salzzusammensetzung einzustellen, damit der Geschmackseindruck der Ursprungsmilch erhalten bleibt.

Das erfindungsgemäße Verfahren ist daher des Weiteren in einer spezifischen Ausgestaltungsform dadurch gekennzeichnet, dass man dem ersten Retentat R1
(i) eine solche Menge des Lactosekonzentrats (Permeat P3) zusetzt, dass sich eine Lactosekonzentration von etwa 0,5 bis etwa 2,5 Gew.-% und vorzugsweise von etwa 0,8 bis 1,8 Gew.-% - bezogen auf die resultierende Standardmilch - ergibt, und/oder
(ii) eine solche Menge des Mineralienkonzentrats (Retentat R3) zusetzt, dass sich eine Mineralienkonzentration von etwa 0,6 bis etwa 1,0 Gew.-% und vorzugsweise von etwa 0,8 bis 0,9 Gew.-% - bezogen auf die resultierende Standardmilch - ergibt, und/oder
(iii) eine solche Menge des Lactosekonzentrats (Permeat P3) sowie des Mineralienkonzentrats (Retentat R3) zusetzt, so dass sich durch die Verdünnung eine Proteinkonzentration von etwa 3,5 bis etwa 4,0 Gew.-% und vorzugsweise von etwa 3,7 bis 3,9 Gew.-% - bezogen auf die resultierende Standardmilch - ergibt.

### HYDROLYSE

Lactose gehört zur Gruppe der Disaccharide und besteht aus den beiden Molekülen D-Galactose und D-Glucose, die über eine β-1,4-glycosidische Bindung verbunden sind.

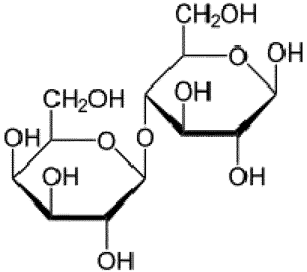

Zum Abbau in die beiden Zuckerkomponenten wird Lactose mit dem Enzym Lactase (auch als LPH oder *LCT* bezeichnet) versetzt. Die Hydrolyse erfolgt vorzugsweise in einem Rührbehälter mit kontinuierlichem Zulauf und Ablauf sowie einer Dosiervorrichtung zur Zugabe des Enzyms und einem am Boden des Reaktors befindlichen Ventil zum Ablassen desaktivierten Enzyms, das im Laufe der Zeit sedimentiert. Es hat sich als vorteilhaft erwiesen, eine wirksame Enzymkonzentration von etwa 180.000 bis 250.000 FCC-Einheiten Lactase pro kg zu hydrolysierender Lactose einzusetzen und die Reaktion bei Temperaturen im Bereich von etwa 4 bis etwa 65 °C und vorzugsweise im Bereich von 20 bis 30°C sowie einem leicht sauren pH-Wert von etwa 5 bis 6 durchzuführen.

### REFERENZZEICHEN IN DER ABBILDUNG

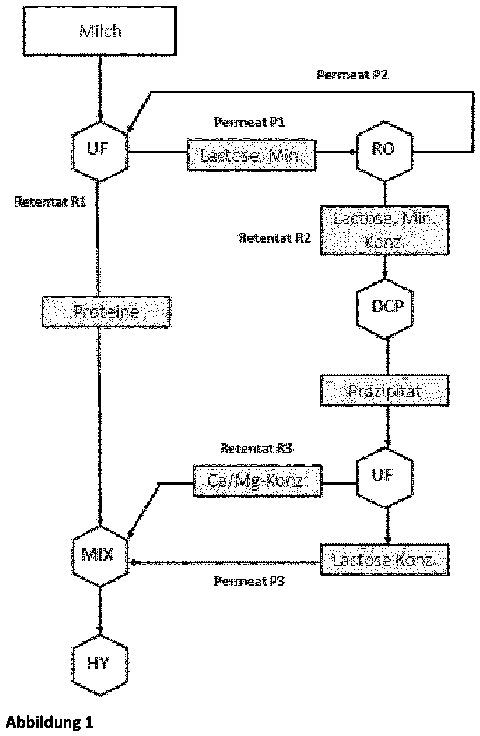

Das erfindungsgemäße Verfahren wird schematisch in **Abbildung 1** zusammengefasst. Dabei bedeuten die Abkürzungen:
- UF: = Ultrafiltration
- RF: = Umkehrosmose
- DCP: = Decalcifizierung
- MIX: = Vermischung
- HY: = Hydrolyse

### BEISPIEL 1

100 kg Milch folgender Zusammensetzung

| **MILCH** | **Menge [Gew.-%]** |
|---|---|
| Lactose | 4,0 |
| Proteine | 3,5 |
| Mineralien | 0,8 |

wurde bei 10°C einer ersten Ultrafiltration unter Zugabe von Diawasser unterworfen. Der Verdünnungsfaktor betrug 10, wobei als Zwischenprodukt ein proteinreiches erstes Retentat R1 erhalten wurde, welches die folgende Zusammensetzung aufwies:

| **RETENTAT R1** | **Menge [Gew.-%]** |
|---|---|
| Lactose | 0,4 |
| Proteine | 11,0 |
| Mineralien | 0,08 |

Gleichzeitig wurde ein proteinarmes erstes Permeat P1 erhalten, welches die folgende Zusammensetzung aufwies:

| **PERMEAT P1** | **Menge [Gew.-%]** |
|---|---|
| Lactose | 4,0 |
| Proteine | < 0,1 |
| Mineralien | 0,8 |

Das erste Permeat P1 wurde bei 10 °C einer Umkehrosmose mit einem Konzentrierungsfaktor 3,5 unterworfen. Dabei wurde ein zweites Permeat P2 erhalten, welches praktisch nur aus (Dia-)Wasser bestand, das in den Ultrafiltrationsschritt zurückgeführt wurde. Das bei der Umkehrosmose erhaltene zweite lactosereiche Retentat R2 wies eine Trockenmasse von 18 Gew.-% und folgende Zusammensetzung auf:

| **RETENTAT R2** | **Menge [Gew.-%]** |
|---|---|
| Lactose | 15,5 |
| Proteine | < 0,1 |
| Mineralien | 2,0 |

Das Retentat R2 wurde etwa 20 min auf etwa 80 °C erhitzt und die darin enthaltenen Phosphate durch Zugabe von Calcium/Magnesiumchlorid als Ca/Mg-phosphate gefällt. Das Präzipitat mit der darüberstehenden Lösung wurde anschließend auf etwa 25 °C abgekühlt und einer zweiten Ultrafiltration unterworfen, wobei zum einen ein drittes Retentat R3 mit einer Trockenmasse von 10 Gew.-% erhalten wurde, die zu 90 Gew.-% aus Calcium- und Magnesiumsalzen bestand, sowie ein drittes Permeat P3 mit 17 Gew.-% Trockenmasse der folgenden Zusammensetzung:

| **PERMEAT P3** | **Menge [Gew.-%]** |
|---|---|
| Lactose | 16,0 |
| Proteine | 0,0 |
| Mineralien (Na, K) | 1,0 |

Anschließend wurde das erste Retentat R1 mit einer solchen Menge des Lactosekonzentrats (Permeat P3) sowie des Salzkonzentrats (Retentat R3) versetzt, dass eine standardisierte Milch der folgenden Zusammensetzung resultierte:

| **STANDARDMILCH** | **Menge [Gew.-%]** |
|---|---|
| Lactose | 1,0 |
| Proteine | 3,5 |
| Mineralien | 0,8 |

Die standardisierte Milch wies demnach den gleichen Gehalt an Proteinen sowie die gleiche Menge und Zusammensetzung an Mineralien wie die Ausgangsmilch, jedoch nur etwa ein Viertel der Lactosemenge auf. Bei der nachfolgenden Hydrolyse wurden aus 1,0 Gew.-% Lactose 2,0 Gew.-% an Glucose und Galactose. Auf diese Weise wurde eine lactosefreie Milch erhalten, die gemäß der unterschiedlichen Süßkraft der vorliegenden Kohlenhydrate den gleichen Süßungsgrad und das gleiche Geschmacksprofil wie die ursprüngliche Milch aufwies.

## Patentansprüche

1. Verfahren zur Herstellung von lactosefreien Milchprodukten, umfassend die folgenden Schritte:
(a) Ultrafiltration einer Ausgangsmilch zur Erzeugung eines ersten Permeats P1 und eines ersten Retentats R1;
(b) Umkehrosmose des ersten Permeats P1 zur Erzeugung eines zweite Permeats P2 und eines zweiten Retentats R2;
(c) Decalcifizierung des zweiten Retentats R2, wobei ein Präzipitat entsteht, welches schwerlösliche Ca/Mg-Salze enthält;
(d) Ultrafiltration des Präzipitates aus Schritt (c) zur Erzeugung eines dritten Permeats P3, welches ein Lactosekonzentrat ist, und eines dritten Retentats R3, welches ein Mineralienkonzentrat ist;
(e) Vermischen des ersten Retentats R1 mit jeweils einer solchen Menge des dritten Permeats P3 sowie des dritten Retentats R3, so dass ein standardisiertes Milchprodukt mit einer definierten Konzentration an Lactose und Salzen erhalten wird.
(f) Hydrolyse des standardisierten Milchproduktes aus Schritt (e) unter Zugabe einer solchen Menge an Lactase, dass die im Produkt enthaltene Menge an Lactose vollständig in Glucose und Galactose gespalten wird.

2. Verfahren nach Anspruch 1, **dadurch gekennzeichnet, dass** man als Ausgangsmilch Vollmilch, Magermilch oder Standardmilch einsetzt.

3. Verfahren nach den Ansprüchen 1 und/oder 2, **dadurch gekennzeichnet, dass** man eine Ausgangsmilch einsetzt, die einen Lactosegehalt im Bereich von etwa 3 bis etwa 5 Gew.-% aufweist.

4. Verfahren nach mindestens einem der Ansprüche 1 bis 3, **dadurch gekennzeichnet, dass** man die Ultrafiltration unter Zugabe einer solchen Menge Diawassers durchführt, dass ein erstes Retentat mit einem Verdünnungsfaktor von etwa 5 bis etwa 15 erhalten wird.

5. Verfahren nach Anspruch 4, **dadurch gekennzeichnet, dass** man das Diawasser aus dem zweiten Permeat P2 der Umkehrosmose bezieht.

6. Verfahren nach mindestens einem der Ansprüche 1 bis 5, **dadurch gekennzeichnet, dass** man die beiden Ultrafiltrationen mit Hilfe von Membranen durchführt, die einen Porendurchmesser von etwa 1.000 bis etwa 50.000 Dalton aufweisen.

7. Verfahren nach mindestens einem der Ansprüche 1 bis 6, **dadurch gekennzeichnet, dass** man die beiden Ultrafiltrationen bei Temperaturen im Bereich von 4 bis 25 °C durchführt.

8. Verfahren nach mindestens einem der Ansprüche 1 bis 7, **dadurch gekennzeichnet, dass** man die Umkehrosmose mit einem Konzentrierungsfaktor von etwa 2,5 bis etwa 5 durchführt.

9. Verfahren nach mindestens einem der Ansprüche 1 bis 8, **dadurch gekennzeichnet, dass** man die Decalcifizierung durch Zugabe von Calcium- und/oder Magnesiumsalzen durchführt.

10. Verfahren nach mindestens einem der Ansprüche 1 bis 9, **dadurch gekennzeichnet, dass** man die Decalcifizierung bei Temperaturen von etwa 50 bis etwa 90 °C und/oder Reaktionszeiten von etwa 10 bis etwa 60 Minuten durchführt.

11. Verfahren nach mindestens einem der Ansprüche 1 bis 10, **dadurch gekennzeichnet, dass** man dem ersten Retentat R1 eine solche Menge des Lactosekonzentrats (Permeat P3) zusetzt, dass sich eine Lactosekonzentration von etwa 0,5 bis etwa 2,5 Gew.-% - bezogen auf die resultierende Standardmilch - ergibt.

12. Verfahren nach mindestens einem der Ansprüche 1 bis 11, **dadurch gekennzeichnet, dass** man dem ersten Retentat R1 eine solche Menge des Mineralienkonzentrats (Retentat R3) zusetzt, dass sich eine Mineralienkonzentration von etwa 0,6 bis etwa 1,0 Gew.-% - bezogen auf die resultierende Standardmilch - ergibt.

13. Verfahren nach mindestens einem der Ansprüche 1 bis 12, **dadurch gekennzeichnet, dass** man dem ersten Retentat R1 eine solche Menge des Lactosekonzentrats (Permeat P3) sowie des Mineralienkonzentrats (Retentat R3) zusetzt, so dass sich durch die Verdünnung eine Proteinkonzentration von etwa 3,5 bis etwa 4,0 Gew.-% - bezogen auf die resultierende Standardmilch - ergibt.

## Claims

1. A process for producing lactose-free dairy products, comprising the following steps:
(a) subjecting a starting milk to ultrafiltration for producing a first permeate P1 and a first retentate R1;
(b) subjecting the first permeate P1 to reverse osmosis for producing a second permeate P2 and a second retentate R2;
(c) subjecting the second retentate R2 to decalcification, wherein a precipitate is formed, which contains slightly soluble Ca/Mg salts;
(d) subjecting the precipitate of step (c) to ultrafiltration for producing a third permeate P3, which is a lactose concentrate, and a third retentate R3, which is a mineral concentrate;
(e) mixing the first retentate R1 with an amount of the third permeate P3 and the third retentate R3 each such that a standardized dairy product is obtained with defined concentrations of lactose and salts or minerals;
(f) hydrolyzing the standardized dairy product of step (e) while adding an amount of lactase such that the residual amount of lactose still contained in the product is completely broken down into glucose and galactose.

2. The process according to claim 1, comprising using whole milk, skimmed milk or standard milk as starting milk.

3. The process according to claims 1 and/or 2, comprising using a starting milk having a lactose content in the range of about 3 to about 5 wt %.

4. The process according to at least one of claims 1 to 3, wherein ultrafiltration is performed while adding an amount of diafiltration water such that a first retentate with a dilution factor of about 5 to about 15 is obtained.

5. The process according to claim 4, wherein the diafiltration water is obtained from the second permeate P2 obtained in the reverse osmosis step.

6. The process according to at least one of claims 1 to 5, wherein the two ultrafiltration steps are performed using membranes having a pore diameter of about 1,000 to about 50,000 Dalton.

7. The process according to at least one of claims 1 to 6, wherein the two ultrafiltration steps are performed at temperatures in the range of 4 to 25 °C.

8. The process according to at least one of claims 1 to 7, wherein the reverse osmosis is performed with a concentration factor of about 2.5 to about 5.

9. The process according to at least one of claims 1 to 8, wherein the decalcification is performed by adding calcium and/or magnesium salts.

10. The process according to at least one of claims 1 to 9, wherein the decalcification is performed at temperatures of about 50 to about 90 °C and/or reaction times of about 10 to about 60 minutes.

11. The process according to at least one of claims 1 to 10, wherein an amount of lactose concentrate (permeate P3) is added to the first retentate R1 such that a lactose concentration of from about 0.5 to about 2.5 wt %--based on the resulting standard milk--is obtained.

12. The process according to at least one of claims 1 to 11, wherein an amount of mineral concentrate (retentate R3) is added to the first retentate R1 such that a mineral concentration of about 0.6 to about 1.0 wt %--based on the resulting standard milk--is obtained.

13. The process according to at least one of claims 1 to 12, wherein amounts of lactose concentrate (permeate P3) and mineral concentrate (retentate R3) are added to the first retentate R1 such that by the dilution, a protein concentration of about 3.5 to about 4.0 wt %--based on the resulting standard milk--is obtained.

## Revendications

1. Procédé pour la production de produits laitiers exempts de lactose, comprenant les étapes suivantes :
(a) ultrafiltration d'un lait de départ en vue d'obtenir un premier perméat P1 et un premier retentat R1 ;
(b) osmose inverse du premier perméat P1 en vue d'obtenir un deuxième perméat P2 et un deuxième retentat R2 ;
(c) décalcification du deuxième retentat R2, un précipité étant formé qui contient des sels de Ca/Mg peu solubles ;
(d) ultrafiltration du précipité de l'étape (c) en vue d'obtenir un troisième perméat P3, qui est un concentrat de lactose, et un troisième retentat R3, qui est un concentrat de minéraux ;
(e) mélange du premier retentat R1 avec à chaque fois une quantité du troisième perméat P3 ainsi que du troisième retentat R3 telle qu'on obtient un produit laitier standardisé présentant une concentration définie en lactose et en sels ;
(f) hydrolyse du produit laitier standardisé de l'étape (e) avec addition d'une quantité de lactase telle que la quantité de lactose contenue dans le produit est dissociée complètement en glucose et en galactose.

2. Procédé selon la revendication 1, **caractérisé en ce qu'**on utilise, comme lait de départ, du lait entier, du lait maigre ou du lait standardisé.

3. Procédé selon les revendications 1 et/ou 2, **caractérisé en ce qu'**on utilise un lait de départ qui présente une teneur en lactose dans la plage d'environ 3 à environ 5% en poids.

4. Procédé selon au moins l'une quelconque des revendications 1 à 3, **caractérisé en ce qu'**on réalise l'ultrafiltration avec addition d'une quantité d'eau de dialyse telle qu'on obtient un premier retentat présentant un facteur de dilution d'environ 5 à environ 15.

5. Procédé selon la revendication 4, **caractérisé en ce qu'**on utilise l'eau de dialyse provenant du deuxième perméat P2 de l'osmose inverse.

6. Procédé selon au moins l'une quelconque des revendications 1 à 5, **caractérisé en ce qu'**on réalise les deux ultrafiltrations à l'aide de membranes qui présentent un diamètre de pore d'environ 1000 à environ 50.000 daltons.

7. Procédé selon au moins l'une quelconque des revendications 1 à 6, **caractérisé en ce qu'**on réalise les deux ultrafiltrations à des températures dans la plage de 4 à 25°C.

8. Procédé selon au moins l'une quelconque des revendications 1 à 7, **caractérisé en ce qu'**on réalise l'osmose inverse à un facteur de concentration d'environ 2,5 à environ 5.

9. Procédé selon au moins l'une quelconque des revendications 1 à 8, **caractérisé en ce qu'**on réalise la décalcification par addition de sels de calcium et/ou de magnésium.

10. Procédé selon au moins l'une quelconque des revendications 1 à 9, **caractérisé en ce qu'**on réalise la décalcification à des températures d'environ 50 à environ 90°C et/ou pendant des temps de réaction d'environ 10 à environ 60 minutes.

11. Procédé selon au moins l'une quelconque des revendications 1 à 10, **caractérisé en ce qu'**on additionne le premier retentat R1 d'une quantité du concentrat de lactose (perméat P3) telle qu'on obtient une concentration en lactose d'environ 0,5 à environ 2,5% en poids, par rapport au lait standardisé résultant.

12. Procédé selon au moins l'une quelconque des revendications 1 à 11, **caractérisé en ce qu'**on additionne le premier retentat R1 d'une quantité du concentrat de minéraux (retentat R3) telle qu'on obtient une concentration en minéraux d'environ 0,6 à environ 1,0% en poids, par rapport au lait standardisé résultant.

13. Procédé selon au moins l'une quelconque des revendications 1 à 12, **caractérisé en ce qu'**on additionne le premier retentat R1 d'une quantité du concentrat de lactose (perméat P3) ainsi que du concentrat de minéraux (retentat R3) telle qu'on obtient, par la dilution, une concentration en protéines d'environ 3,5 à environ 4,0% en poids, par rapport au lait standardisé résultant.
